# EUROPEAN PATENT SPECIFICATION

(11) **EP 2 178 040 B1**
(45) Date of publication and mention of the grant of the patent: **16.05.2012**
(21) Application number: 08748624.7
(22) Date of filing: 20.05.2008
(51) Int. Cl.: G06F 21/00, H04L 29/08, H04L 29/06, H04W 12/06

(54) **A METHOD, SERVER AND SYSTEM OF SERVICE AUTHORIZATION**
VERFAHREN, SERVER UND SYSTEM ZUR DIENSTAUTORISIERUNG
PROCÉDÉ, SERVEUR ET SYSTÈME D'AUTORISATION DE SERVICE

(30) Priority: 08.08.2007 CN 200710075680
(43) Date of publication of application: 21.04.2010
(73) Proprietor: Huawei Technologies Co., Ltd., Longgang District, Shenzhen Guangdong 518129 (CN)
(72) Inventor: WANG, Yulong, Shenzhen, Guangdong 518129 (CN)
(74) Representative: Körber, Martin Hans
(86) International application number: PCT/CN2008/071018
(87) International publication number: WO 2009/018732

(56) References cited:
- EP-A1- 1 770 940
- EP-A2- 1 523 129
- CN-A- 1 574 986
- CN-A- 1 848 898
- CN-A- 1 905 455
- CN-A- 101 132 403
- US-A1- 2005 114 680
- "3rd Generation Partnership Project; Technical Specification Group Services and System Aspects; 3GPP system to Wireless Local Area Network (WLAN) Interworking; Functional and architectural definition (Release 6); 3GPP TR 23.934" ETSI STANDARDS, LIS, SOPHIA ANTIPOLIS CEDEX, FRANCE, no. V1.0.0, 1 August 2002 (2002-08-01), XP014021958 ISSN: 0000-0001
- ABOBA MICROSOFT J LU AIMQUEST CORP J ALSOP I-PASS ALLIANCE J DING ASIAINFO W WANG MERIT NETWORK B ET AL: "Review of Roaming Implementations; rfc2194.txt" IETF STANDARD, INTERNET ENGINEERING TASK FORCE, IETF, CH, 1 September 1997 (1997-09-01), XP015007978 ISSN: 0000-0003

## Description

### FIELD OF THE TECHNOLOGY

The present invention relates to the field of communications, and more particularly to a service authorization method, server, and system.

### BACKGROUND

Intercommunications between various wireless communication networks, such as a general packet radio service (GPRS) network, a global system for mobile communication (GSM), a code division multiple access (CDMA) system, and a wideband code division multiple access (WCDMA) network, have been highlighted in current researches.

A user terminal is able to access the networks through an access network, and the access network may be connected to the Internet, an authentication, authorization, and accounting (AAA) system in the third generation (3G) system, and a gateway GPRS support node (GGSN) respectively.

Particularly, the AAA server is mainly responsible for controlling the authority of users accessing the Internet Protocol (IP), and only the user terminals having registered in the AAA server and passed the authentication and authorization of the AAA server when accessing are allowed to use the services of the IP network. For example, in a fixed broadband network, when accessing the network, a user has to input the account and password first, and is allowed to use the services of the network only after passing the authorization.

As for a network service operator, when purchasing the AAA server to carry out the services, the operator has to purchase licenses of the AAA servers from the supplier, and the number of the purchased licenses thus determines the maximum number of users carrying out the services on the system for the operator.

Currently, before a user terminal utilizes a service, the user is generally required to subscribe to the service at a business hall or subscribe to the service on a portal by himself/herself. A static license control is performed during the service subscription, and if the number of the users that have currently registered the service exceeds the authorized license number, the user is not allowed for registering. The user may use the service only after successfully registering the service.

However, the inventor of the present invention found that the prior art has the following disadvantages.

1. In order to subscribe to a new service, the user has to go to the business hall or operate on the portal by himself/herself, thus increasing the operating difficulty for the user.

2. After registering the service, the user may not always use the service, and thus the users having registered but not using the service at the time are potential users with idle licenses. As the number of the licenses is limited, when other users intend to register for the service, the registration might fail since the number of the users that have currently registered exceeds the authorized license number, and thus the users may be rejected from using the service. In order to prevent service requests of the users from being rejected, the operator needs to additionally purchase the licenses for the users, which surely increases the capital expenditure of the operator.
US 2005/011480 A1 discloses a method and apparatus for performing SIM-based authentication and authorization in a WLAN Internet Service Provider (WISP) network supporting the universal access method (UAM) of authentication and authorization enabling roaming for customers of mobile service providers onto said networks. In addition, the invention provides a secure way of authenticating the customer's client device to the mobile service provider's network by employing temporary credentials for authentication that provide privacy of the user's identity and prevent the 'pass-through' facility; the authentication can be done more securely and quickly.
EP 1770940 A1 discloses a method and apparatus for establishing a communication between a mobile device and a network. A Gateway (200) implements a method to authenticate a wireless LAN mobile device (100) utilizing the Subscriber Identity Module (SIM) information. Upon successful authentication the Gateway (200) instructs an access server (105) to provide service to the mobile device (100) according to a mobile device profile. The access server (105) performs traffic routing as instructed by the gateway (200), which may include secure tunneling to an access network gateway (202) or direct routing to Internet networks (108).
EP 1523129 A2 discloses a method and device for routing data packets of a wireless terminal device in a communication network. When Open system Authentication is used, the system operates similarly as the current Nokia Operator Wireless LAN system, in which the terminal device and the access controller are the parties involved in the authentication. The access controller relays information relating to the authentication between the terminal device and an authenticating server, and it is capable of updating independently the list of users it maintains. When authentication according IEEE 802.1X authentication, the access point operates according to the IEEE 802.1X standard, serving as the authenticating party and relaying information relating to the authentication between the terminal device and the authentication server. In addition, the list maintained by the access controller is updated after a successful authentication, for example by the access point or the authenticating server.
As for another relating technology, please refer to the "3^{rd} Generation Partnership Project; Technical Specification Group Services and System Aspects; 3GPP system to Wireless Local Area Network (WLAN) Interworking; Functional and architectural definition (Release 6); 3GPP TR 23.934"
Further refer to "ABOBA MICROSOFT J LU AIMQUEST CORP J ALSOP I-PASS ALLIANCE J DING ASIAINFO W WANG MERIT NETWORK B ET AL: 'Review of Roaming Implementations; rfc2194.txt"'.

### SUMMARY

Accordingly, the present invention is directed to a service authorization method, server, and system, so that users may subscribe to services more conveniently, thus reducing the capital expenditure of operators.

In order to solve the above technical problem, an embodiment of the present invention provides a service authorization method, which includes the following steps:

A request for using a service is received from a user terminal;

If the user terminal has not registered the requested service yet, the AAA server obtains information of the user terminal from a third party service system by sending a request for querying the information of the user terminal to a third party service system; a registration of the user terminal is performed according to the obtained information of the user terminal;

If the registration is successful, the user terminal is allowed to use the requested service;
wherein the step of performing automatically the registration of the user terminal further comprises:
performing, by the AAA server, a license control by judging whether the number of the user terminals currently using the service has reached the number of the user terminals allowed by a third party service system;
determining that the registration fails if the number of the user terminals currently using the service has reached the user number allowed by the third party service system; and
determining that the registration is successful if the number of the user terminals currently using the service has not reached the number of the user terminals currently using the service allowed by the third party service system.

Another embodiment of the present invention provides an authentication, authorization, and accounting (AAA) server, which includes a receiving unit, a determination unit, a registration unit, and a processing unit.

The receiving unit is adapted to receive a request for using a service from a user terminal. An information acquisition unit, adapted to obtain information of the user terminal from a third party service system by initiating a request for querying the information of the user terminal to the third party service system.

The determination unit is adapted to determine whether the user terminal has registered the requested service when the receiving unit receives the request for using the service from the user terminal.

The registration unit is adapted to perform a registration of the user terminal according to the information of the user terminal obtained by the information acquisition unit when the determination unit determines that the user terminal has not registered the requested service yet.

The processing unit is adapted to allow the user terminal to use the service when the registration unit performs the registration successfully; wherein the registration unit comprises:
a license control sub-unit, adapted to judge whether number of the user terminals currently using the service has reached the number of the user terminals allowed by the third party service system; and
a registration result determination sub-unit, adapted to determine that the registration fails when the license control sub-unit determines that the number of the user terminals currently using the service has reached the number of the user terminals allowed by the third party service system, or to determine that the registration is successful when the license control sub-unit determines that the number of the user terminals currently using the service has not reached the number of the user terminals allowed by the third party service system.

An embodiment of the present invention further provides a service authorization system, which includes a third party service entity and an AAA server.

The third party service entity is adapted to store information about a user terminal which needs to be used by the AAA server and query the user terminal information of the user terminal requesting the use of a service.

The AAA server is adapted to receive a request for using a service from the user terminal, and obtain the information of the user terminal from the third party service entity to perform a registration of the user terminal when it is determined that the user terminal has not registered the requested service yet.

Compared with the prior art, the embodiments of the present invention have the following effects.

A request for using a service is received from a user terminal, and if the user terminal has not registered the requested service yet, a registration of the user terminal is performed automatically. If the registration is successful, the user terminal is allowed to use the requested service. In the prior art, the user has to register before requesting for using a service, and the user is required to participate in the registration. However, in the embodiments of the present invention, the user requests for using a service before registering the service, and the registration is performed automatically, which the user is unaware of, so that the user may experience the service directly without registering, thereby greatly enhancing the service experience for the user. Moreover, due to the adoption of the automatic registration, the users do not have to subscribe to the services at a business hall or subscribe to the services on a portal by themselves, and the services are automatically subscribed to make the service subscription more convenient, thereby solving the problem of service subscription for the users and reducing the operating cost for the operators. In addition, the automatic registration of the user terminal that requests the service avoids the locking of the potential customer group, so as to more effectively expand the service.

### BRIEF DESCRIPTION OF THE DRAWING(S)

The present invention will become more fully understood from the detailed description given herein below for illustration only, and thus are not limitative of the present invention, and wherein:

Figure 1 is a schematic networking view of a fixed broadband network realizing service authorization according to a first embodiment of the present invention;

Figure 2 is a schematic networking view of a GPRS/WCDMA packet domain realizing service authorization according to the first embodiment of the present invention;

Figure 3 is a schematic networking view of a CDMA packet domain realizing service authorization according to the first embodiment of the present invention;

Figure 4 is a flow chart of a service authorization method according to the first embodiment of the present invention;

Figure 5 is a flow chart of a service authorization method according to a second embodiment of the present invention;

Figure 6 is a schematic structural view of an AAA server according to a third embodiment of the present invention; and

Figure 7 is a schematic structural view of a service authorization system according to a fourth embodiment of the present invention.

### DETAILED DESCRIPTION

In order to make the objective, technical solutions, and advantages of the present invention comprehensible, embodiments of the present invention are described in detail below with the accompanying drawings.

A first embodiment of the present invention provides a service authorization method, in which when a service is requested by a user terminal, an automatic registration for the service is performed through an authentication, authorization, and accounting (AAA) server.

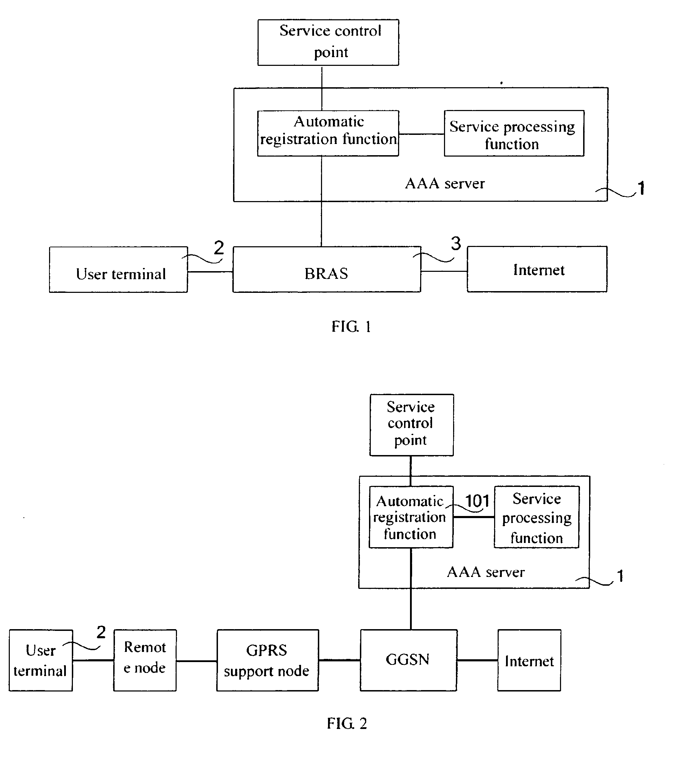

In a fixed broadband network, as shown in figure 1, when a user terminal accesses the network, the user terminal sends an authentication request for requesting an access service to an AAA server 1 through a broadband remote access server (BRAS) 3, and the AAA server 1 performs a registration for the service requested by the user terminal 2. If the registration is successful, it is indicated that the authentication is passed, and the user terminal 2 is allowed to access the requested service. After the user terminal 2 accesses the service, the BRAS 3 periodically collects information of the user terminal 2 such as the time length and flow rate of using the service, and sends the collected information to the AAA server 1 for charging through an accounting request message.

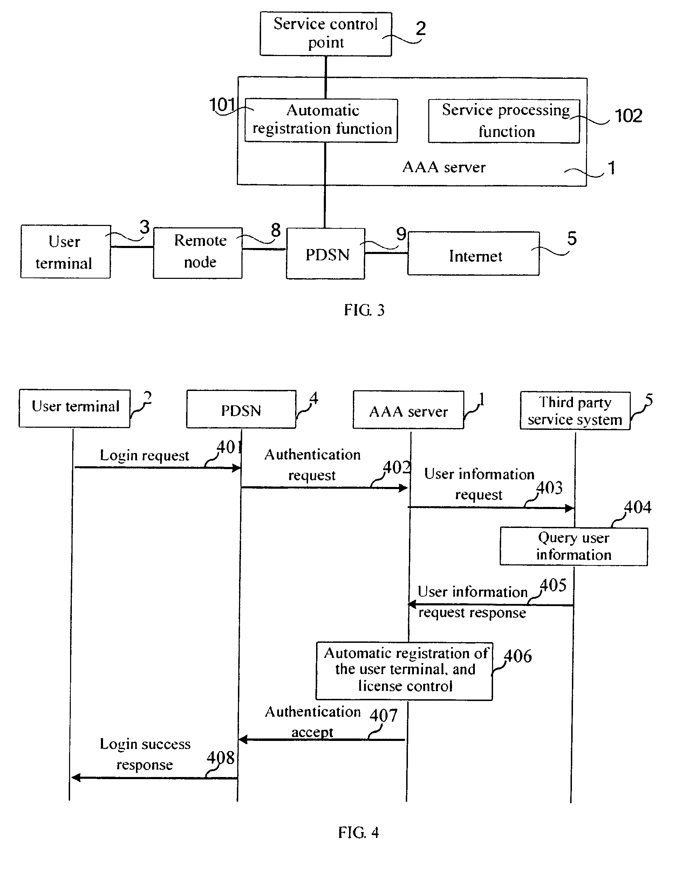

In a GPRS/WCDMA network as shown in figure 2 or a CDMA network as shown in FIG 3, when the user terminal 2 accesses the network, the function accomplished by the AAA server 1 is similar to that of the AAA server in the fixed broadband network, and the service authorization methods are also similar, so the details will not be described herein again. Seen from the network structures shown in figures 1 to 3, the AAA server has an automatic registration function 101 added to the existing architecture.

Some users may not necessarily use the services after registering at a business hall or on a portal, and such users are potential users. As for operators of the services, the number of users allowed to use the service, i.e., the licenses, is obtained by purchasing. Therefore, the users having registered but not using the services actually waste the licenses purchased by the operators. In some embodiments of the present invention, a license control may be performed during the automatic registration of the user terminal, so that every license purchased by the operator is necessary, and there is no need to purchase the licenses for all the potential users, thus avoiding or reducing the waste of the licenses.

Taking the CDMA network shown in figure 3 as an example, when the user terminal 2 accesses a service of an IP network through a packet data service node (PDSN) 4, the PDSN 4 sends an access authentication request to the AAA server 1. If the automatic registration function 101 determines that the user terminal 2 has registered the requested service, the user terminal 2 is allowed to use the service. If the automatic registration function 101 determines that the user terminal 2 has not registered the requested service yet, a registration of the user terminal 2 is performed automatically, in which a license control is carried out for the automatic registration. When the license control is passed and the registration is successful, the user terminal 2 is allowed to use the service; otherwise, the user terminal is not allowed to use the service.

Referring to figure 4, the service authorization method specifically includes the following steps.

In Step 401, the user terminal 2 sends an activation or request for using a service to a network side, for example, requesting for accessing a wireless IP network.

In Step 402, after receiving the service request from the user terminal 2, the PDSN 4 sends an authentication request message to the AAA server 1, and the authentication request message includes information of an international mobile station identify (IMSI) or an electronic serial number (ESN) of the user terminal 2.

In Step 403, the AAA server 1 determines whether the user terminal 2 has registered the requested service or not. If the user terminal 2 has registered the requested service, the user terminal 2 is allowed to use the service, and the corresponding service is provided for the user terminal 2. If the user terminal 2 has not registered the service yet, the AAA server I sends a user information request to a third party service system 5.

In Step 404. the third party service system 5 queries the user information corresponding to the user terminal 2.

In Step 405, the third party service system 5 returns a response message of the user information request to the AAA server 1, and the response message includes the queried user information.

In Step 406, the AAA server 1 performs a license control on the user terminal 2, i.e.. determines whether number of the user terminals currently using the service has reached number of the user terminals allowed by the system, and if it has reached, determines that the registration fails; otherwise, performs an automatic registration of the user terminal 2 according to the user information queried by the third party service system 5, and updates the number of the user terminals currently using the service corresponding to the license.

In Step 407, after the registration is successfully performed, the AAA server 1 returns an authentication accept message to the PDSN 4, so as to allow the user terminal 2 to use the requested service.

In Step 408, the PDSN 4 returns a service activation response or an access successful response to the user terminal 2 according to the received authentication accept message, so as to access the user terminal 2 to the service.

Further, the AAA server may periodically detect the user terminal registering at the AAA server. When the time length without using the requested service by the user terminal exceeds a preset threshold, the AAA server automatically may deregister the user terminal, and meanwhile releases the license occupied by the user terminal, so as to further avoid the waste of the license.

Through this embodiment, when the automatic registration is successfully performed, the user terminal is allowed to use the requested service. Therefore, the users do not have to subscribe to the services at a business hall or subscribe to the services on a portal by themselves, and the services are automatically subscribed to make the service subscription more convenient, thereby solving the problem of service subscription for the users and reducing the operating cost for the operators. In addition, the automatic registration of the user terminal that requests the service avoids the locking of the potential customer group, so as to more effectively expand the service.

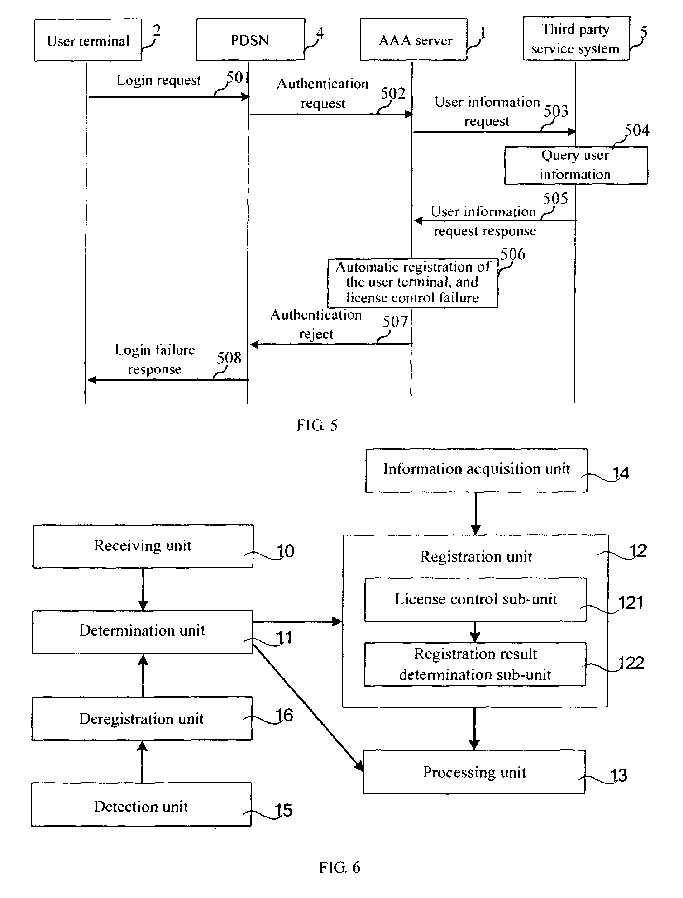

A second embodiment of the present invention provides a service authorization method. The network system in figure 3 is also taken as an example, and the service authorization method includes the following steps, as shown in FIG. 5.

Steps 501 to 505 are respectively similar to Steps 401 to 405, and the details will not be repeated herein again.

Step 506 is similar to Step 406, in which the AAA server 1 performs an automatic registration of the user terminal 2. The difference between the two steps lies in that, when the AAA server 1 fails to acquire the user information from the third party service system 5, for example, the corresponding user information cannot be obtained due to the inexistence of the user, so that the automatic registration of the AAA server 1 or the user terminal fails. Or, the AAA server 1 successfully obtains the user information from the third party service system 5, but the license control fails when performing the automatic registration according to the obtained user information. For example, when the number of the user terminals currently using the service has reached the user number allowed by the system, the automatic registration fails as well. As for the registration failure caused by the unsuccessful license control, the system may inform the operator to purchase the licenses through alarming or by other means, so as to ensure the normal registration of the users. Therefore, the operator is able to purchase the licenses for the users actually requiring to use the service, and provide the required service for the users in time, so as to improve the user experience and the utilization of the license.

In Step 507, the AAA server 1 returns an authentication reject message to the PDSN 4 for forbidding the user terminal 2 to use the requested service as the automatic registration of the user terminal 2 fails.

In Step 508, the PDSN 4 receives the authentication reject message from the AAA server 1, and returns a corresponding login failure response to the user terminal 2.

A third embodiment of the present invention provides an AAA server. According to the three network architectures for performing service authorization by the AAA server as shown in figures. 1 to 3 disclosed in the first embodiment of the present invention, the structure of the AAA server for realizing the automatic registration and service processing functions is shown in FIG. 6, and the AAA server includes a receiving unit 6, a determination unit 7, a registration unit 8, and a processing unit 9.

In particular, the AAA server receives a request for using a service from a user terminal through the receiving unit 6. When the receiving unit 6 receives the request for using the service from the user terminal, the determination unit 7 determines whether the user terminal has registered the requested service or not. If the user terminal has registered the requested service, the processing unit 9 directly allows the user terminal to use the requested service. If the user terminal has not registered the requested service, the registration unit 8 performs a registration of the user terminal.

The registration unit 8 further includes a license control sub-unit 801 and a registration result determination sub-unit 802.

The license control sub-unit 801 is adapted to determine whether number of the user terminals currently using the service has reached number of the user terminals allowed by the system. The registration result determination sub-unit 802 is adapted to determine that the registration fails when the license control sub-unit 801 determines that the number of the user terminals currently using the service has reached the number of the user terminals allowed by the system.

When the registration result determination sub-unit 802 determines that the registration fails, i.e., the registration performed by the registration unit 8 fails, the processing unit 9 returns a request failure response to the user terminal for forbidding the user terminal to use the service. When the registration result determination sub-unit 802 determines that the registration is successful, i.e., the registration performed by the registration unit 8 is successful, the processing unit 9 allows the user terminal to use the requested service. During the registration of the user terminal, the license control is performed, so that every license purchased by the operator is necessary, and there is no need to purchase the licenses for all the potential users, thus avoiding or reducing the waste of the licenses and further lowering the capital expenditure of the operator.

Moreover, the AAA server further includes an information acquisition sub-unit 10, a detection unit 11, and a deregistration unit 12.

In particular, the information acquisition sub-unit 10 is adapted to initiate a request for querying information of the user terminal to a third party service system, obtain the information of the user terminal from the third party service system, and provide the obtained information of the user terminal to the registration unit 8 for performing a registration of the user terminal. When the information acquisition sub-unit 10 is unable to obtain the information of the user terminal, i.e., the user terminal does not exist, the registration unit 8 determines that the registration fails according to the information about the failure of obtaining the information of the user terminal returned by the information acquisition sub-unit 10, and meanwhile, the processing unit 9 returns a request failure response to the user terminal for forbidding the user terminal to use the requested service.

The detection unit 11 of the AAA server is adapted to detect the user terminal registering at the AAA server periodically, and when the detection unit 11 detects that a time length without using the requested service by the user terminal registering at the AAA server exceeds a preset threshold, the deregistration unit 12 is adapted to deregister the user terminal. By timely deregistering the user terminal not using the requested service for a long time, the waste of the license is further avoided.

After receiving the request for using the service from the user terminal, if the user terminal has not registered the requested service, the AAA server performs a registration of the user terminal automatically. If the registration is successful, the user terminal is allowed to use the requested service. Due to the adoption of the automatic registration, the users do not have to subscribe to the services at a business hall or subscribe to the services on a portal by themselves, and the services are automatically subscribed to make the service subscription more convenient, thereby solving the problem of service subscription for the users and reducing the operating cost for the operators. In addition, the automatic registration of the user terminal that requests the service avoids the locking of the potential customer group, so as to more effectively expand the service.

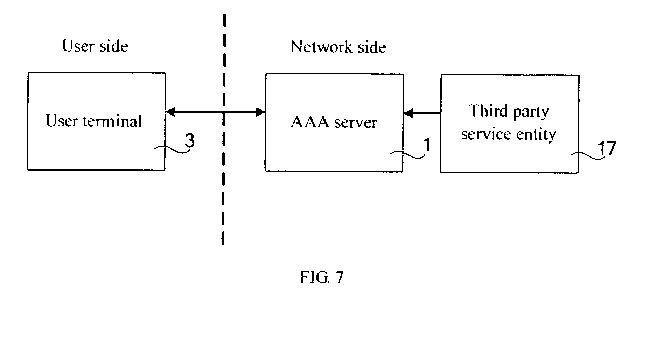

A fourth embodiment of the present invention provides a service authorization system including a third party service entity 5 and an AAA server 1, as shown in figure 7. The third party service entity 5 is adapted to store information about a user terminal 2. The AAA server 1 is adapted to receive a request for using a service from the user terminal, and obtain the information of the user terminal 2 from the third party service entity 5 to perform a registration of the user terminal 2 when it is determined that the user terminal 2 has not registered the requested service yet. The AAA server 1 is connected to the user terminal 2.

It should be noted that, the AAA server 1 may be further adapted to determine whether number of the user terminals currently using the service has reached number of the user terminals allowed by the system. If the number of the user terminals currently using the service has reached the number of the user terminals allowed by the system, it is determined that the registration fails, and if the number of the user terminals currently using the service has not reached the user number allowed by the system, it is determined that the registration is successful.

In addition, the AAA server 1 may be further adapted to return a request failure response to the user terminal 2 for forbidding the user terminal 2 to use the requested service when it is determined that the registration fails.

In view of the above, according to the embodiments of the present invention, after receiving the request for using the service from the user terminal, if the user terminal has not registered the requested service, the AAA server performs a registration of the user terminal automatically. If the registration is successful, the user terminal is allowed to use the requested service. Due to the adoption of the automatic registration, the users do not have to subscribe to the services at a business hall or subscribe to the services on a portal by themselves, and the services are automatically subscribed to make the service subscription more convenient, thereby solving the problem of service subscription for the users and reducing the operating cost for the operators. In addition, the automatic registration of the user terminal that requests the service avoids the locking of the potential customer group, so as to more effectively expand the service.

A license control may be performed during the registration for the user terminal. That is, if number of the user terminals currently using the service has reached the number of the user terminals allowed by the system, it is determined that the registration fails. Some users may not necessarily use the services after registering at a business hall or on a portal, and these users arc potential users. As for the operators, number of users allowed to use the service, i.e., the licenses, is obtained by purchasing. Therefore, the users having registered but not using the services actually waste the licenses purchased by the operator. In the embodiments of the present invention, it is determined that the number of the user terminals currently using the service has reached the user number allowed by the system when an automatic registration of the user terminal is performed, so that every license purchased by the operator is necessary, and there is no need to purchase the licenses for all the potential users, thus avoiding or reducing the waste of the licenses and further lowering the capital expenditure of the operator.

The AAA server may periodically detect the user terminal after automatic registration, and if a time length without using the requested service for the user terminal after automatic registration exceeds a preset threshold, deregisters the user terminal to further avoid the waste of the licenses.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A service authorization method, comprising:
receiving, by an authentication, authorization, and accounting, AAA, server, a request for using a service from a user terminal (401);
obtaining, by the AAA server, information of the user terminal from a third party service system by sending a request for querying the information of the user terminal to a third party service system (404 and 405), and performing automatically, by the AAA server, a registration of the user terminal according to the obtained information of the user terminal if the user terminal has not registered the requested service yet (406); and
allowing, by the AAA server, the user terminal to use the requested service if the registration is successful (407);
wherein the step of performing automatically, by the AAA server, the registration of the user terminal (406) is further **characterized by** comprising
performing, by the AAA server, a license control by judging whether the number of the user terminals currently using the service has reached the number of the user terminals allowed by the third party service system;
determining, by the AAA server, that the registration fails if the number of the user terminals currently using the service has reached the user number allowed by the third party service system; and
determining, by the AAA server, that the registration is successful if the number of the user terminals currently using the service has not reached the number of the user terminals currently using the service allowed by the third party service system.

2. The service authorization method according to claim 1, further comprising:
returning a request failure response to the user terminal for forbidding the user terminal to use the service if the registration fails (507).

3. The service authorization method according to claim 1, further comprising:
detecting, by the AAA server, the user terminal registering at the AAA server periodically; and
deregistering the user terminal if a time length without using the requested service by the user terminal registering at the AAA server exceeds a preset threshold.

4. An authentication, authorization, and accounting, AAA, server, comprising:
a receiving unit (10), adapted to receive a request for using a service from a user terminal (3);
an information acquisition unit (14), adapted to obtain information of the user terminal (3) from a third party service system by initiating a request for querying the information of the user terminal to the third party service system (5);
a determination unit (11), adapted to judge whether the user terminal has registered the requested service when the receiving unit receives the request for using the service from the user terminal;
a registration unit (12), adapted to perform a registration of the user terminal (3) according to the information of the user terminal (3) obtained by the information acquisition unit (14) when the determination unit (11) determines that the user terminal (3) has not registered the requested service yet; and
a processing unit (13), adapted to allow the user terminal (3) to use the service when the registration unit (12) performs the registration successfully;
wherein the registration unit (12) comprises:
a license control sub-unit (121), adapted to judge whether the number of the user terminals currently using the service has reached the number of the user terminals allowed by the third party service system (5); and
a registration result determination sub-unit (122), adapted to determine that the registration fails when the license control sub-unit (121) determines that the number of the user terminals currently using the service has reached the number of the user terminals allowed by the third party service system (5), or to determine that the registration is successful when the license control sub-unit (121) determines that the number of the user terminals currently using the service has not reached the number of the user terminals allowed by the third party service system (5).

5. The AAA server according to claim 4, wherein the processing unit (13) is further adapted to return a request failure response to the user terminal (3) for forbidding the user terminal (3) to use the service when the registration result determination sub-unit (122) determines that the registration fails.

6. The AAA server according to any one of claims 4 or 5, further comprising:
a detection unit (15), adapted to detect the user terminal (3) registering at the AAA server (1) periodically; and
a deregistration unit (16), adapted to deregister the user terminal (3) when the detection unit(15) detects that a time length without using the requested service for the user terminal (3) registering at the AAA server (1) exceeds a preset threshold.

7. A service authorization system, comprising:
an authentication, authorization, and accounting (AAA) server (1) according to any one of the claims 4-6; and
a third party service entity (17), adapted to store information about a user terminal (3) which needs to be used by the AAA server (1) and query the user terminal information of the user terminal requesting the use of a service.

## Patentansprüche

1. Dienstautorisierungsverfahren, das Folgendes umfasst:
Empfangen durch einen Authentifizierungs-, Autorisierungs- und Abrechnungs-Server (AAA-Server) einer Anforderung zum Nutzen eines Dienstes von einem Anwenderendgerät (401);
Erhalten durch den AAA-Server von Informationen über das Anwenderendgerät von einem Dienstsystem einer dritten Stelle durch Senden einer Anforderung zum Abfragen der Informationen über das Anwenderendgerät an ein Dienstsystem einer dritten Stelle (404 und 405) und automatisches Ausführen durch den AAA-Server einer Registrierung des Anwenderendgeräts in Übereinstimmung mit den erhaltenen Informationen über das Anwenderendgerät, wenn das Anwenderendgerät noch nicht bei dem angeforderten Dienst registriert ist (406); und
Zulassen durch den AAA-Server, dass das Anwenderendgerät den angeforderten Dienst nutzt, wenn die Registrierung erfolgreich ist (407);
wobei der Schritt zum automatischen Ausführen der Registrierung des Anwenderendgeräts (406) durch den AAA-Server ferner **dadurch gekennzeichnet ist, dass** er Folgendes umfasst:
Ausführen durch den AAA-Server einer Lizenzkontrolle, um zu entscheiden, ob die Anzahl der Anwenderendgeräte, die den Dienst gegenwärtig nutzen, die Anzahl der Anwenderendgeräte, die durch das Dienstsystem einer dritten Stelle zugelassen ist, erreicht hat;
Bestimmen durch den AAA-Server, dass die Registrierung fehlschlägt, wenn die Anzahl der Anwenderendgeräte, die den Dienst gegenwärtig nutzen, die Anwenderanzahl, die durch das Dienstsystem einer dritten Seite zugelassen ist, erreicht hat; und
Bestimmen durch den AAA-Server, dass die Registrierung erfolgreich ist, wenn die Anzahl der Anwenderendgeräte, die den Dienst gegenwärtig nutzen, die Anzahl der Anwenderendgeräte, die gegenwärtig den durch das Dienstsystem einer dritten Seite zugelassenen Dienst nutzen, nicht erreicht hat.

2. Dienstautorisierungsverfahren nach Anspruch 1, das ferner Folgendes umfasst:
Zurücksenden einer Anforderungsfehlschlagsantwort an das Anwenderendgerät, um dem Anwenderendgerät die Nutzung des Dienstes zu verbieten, wenn die Registrierung fehlschlägt (507).

3. Dienstautorisierungsverfahren nach Anspruch 1, das ferner Folgendes umfasst:
periodisches Detektieren durch den AAA-Server der Registrierung des Anwenderendgeräts bei dem AAA-Server; und
Aufheben der Registrierung des Anwenderendgeräts, wenn eine Zeitdauer ohne Nutzung des angeforderten Dienstes durch das Anwenderendgerät, das sich beim AAA-Server registriert, einen im Voraus eingestellten Schwellenwert übersteigt.

4. Authentifizierungs-, Autorisierungs- und Abrechnungs-Server (AAA-Server), der Folgendes umfasst:
eine Empfangseinheit (10), die ausgelegt ist zum Empfangen einer Anforderung zum Nutzen eines Dienstes von einem Anwenderendgerät (3);
eine Informationserfassungseinheit (14), die ausgelegt ist zum Erhalten von Informationen über das Anwenderendgerät (3) von einem Dienstsystem einer dritten Stelle durch Auslösen einer Anforderung zum Abfragen der Informationen über das Anwenderendgerät an das Dienstsystem einer dritten Seite (5);
eine Bestimmungseinheit (11), die ausgelegt ist zum Entscheiden, ob das Anwenderendgerät den angeforderten Dienst registriert hat, wenn die Empfangseinheit die Anforderung zum Nutzen des Dienstes von dem Anwenderendgerät empfängt;
eine Registrierungseinheit (12), die ausgelegt ist zum Ausführen einer Registrierung des Anwenderendgeräts (3) gemäß den Informationen über das Anwenderendgerät (3), die durch die Informationserfassungseinheit (14) erhalten werden, wenn die Bestimmungseinheit (11) bestimmt, dass das Anwenderendgerät (3) noch nicht den angeforderten Dienst registriert hat; und
eine Verarbeitungseinheit (13), die ausgelegt ist zum Zulassen, dass das Anwenderendgerät (3) den Dienst nutzt, wenn die Registrierungseinheit (12) die Registrierung erfolgreich ausführt;
wobei die Registrierungseinheit (12) Folgendes umfasst:
eine Lizenzkontrolle-Untereinheit (121), die ausgelegt ist zum Entscheiden, ob die Anzahl der Anwenderendgeräte, die den Dienst gegenwärtig nutzen, die Anzahl der Anwenderendgeräte, die von dem Dienstsystem einer dritten Stelle (5) zugelassen ist, erreicht hat, und
eine Registrierungsergebnis-Bestimmungsuntereinheit (122), die ausgelegt ist zum Bestimmen, dass die Registrierung fehlschlägt, wenn die Lizenzkontrolle-Untereinheit (121) bestimmt, dass die Anzahl der Anwenderendgeräte, die den Dienst gegenwärtig nutzen, die Anzahl der Anwenderendgeräte, die von dem Dienstsystem einer dritten Stelle (5) zugelassen ist, erreicht hat, oder zum Bestimmen, dass die Registrierung erfolgreich ist, wenn die Lizenzkontrolle-Untereinheit (121) bestimmt, dass die Anzahl der Anwenderendgeräte, die den Dienst gegenwärtig nutzen, die Anzahl der Anwenderendgeräte, die von dem Dienstsystem einer dritten Stelle (5) zugelassen ist, nicht erreicht hat.

5. AAA-Server nach Anspruch 4, wobei die Verarbeitungseinheit (13) ferner ausgelegt ist zum Zurücksenden einer Anforderungsfehlschlagsantwort an das Anwenderendgerät (3), um dem Anwenderendgerät (3) eine Nutzung des Dienstes zu verbieten, wenn die Registrierungsergebnis-Bestimmungsuntereinheit (122) bestimmt, dass die Registrierung fehlschlägt.

6. AAA-Server nach Anspruch 4 oder 5, der ferner Folgendes umfasst:
eine Detektionseinheit (15), die ausgelegt ist zum periodischen Detektieren der Registrierung des Anwenderendgeräts (3) bei dem AAA-Server (1); und
eine Registrierungs-Aufhebungseinheit (16), die ausgelegt ist zum Aufheben der Registrierung des Anwenderendgeräts (3), wenn die Detektionseinheit (15) detektiert,
dass eine Zeitspanne ohne Nutzung des angeforderten Dienstes für das Anwenderendgerät (3), das bei dem AAA-Server (1) registriert ist, einen im Voraus eingestellten Schwellenwert übersteigt.

7. Dienstautorisierungssystem, das Folgendes umfasst:
einen Authentifizierungs-, Autorisierungs- und Abrechnungs-Server (1) (AAA-Server) nach einem der Ansprüche 4 bis 6; und
eine Dienstentität (17) einer dritten Stelle, die ausgelegt ist zum Speichern von Informationen über ein Anwenderendgerät (3), das verwendet werden soll, durch den AAA-Server (1) und Abfragen der Anwenderendgerät-Informationen des Anwenderendgeräts, das die Nutzung eines Dienstes anfordert.

## Revendications

1. Procédé d'autorisation de service, comprenant :
la réception, par un serveur d'authentification, d'autorisation et de comptabilité, AAA, d'une requête d'utilisation d'un service depuis un terminal utilisateur (401) ;
l'obtention, par le serveur AAA, d'informations du terminal utilisateur depuis un système de service tiers en envoyant une requête de recherche d'informations du terminal utilisateur à un système de service tiers (404 et 405), et l'exécution automatique, par le serveur AAA, d'un enregistrement du terminal utilisateur en fonction des informations obtenues du terminal utilisateur si le terminal utilisateur n'a pas encore enregistré le service requis (406) ; et
l'autorisation, par le serveur AAA, au terminal utilisateur, d'utiliser le service requis si l'enregistrement réussit (407) ;
dans lequel l'étape d'exécution automatique, par le serveur AAA, de l'enregistrement du terminal utilisateur (406) est **caractérisée en outre en ce qu'**elle comprend :
l'exécution, par le serveur AAA, d'un contrôle de licence en jugeant si le nombre de terminaux utilisateurs en train d'utiliser le service a atteint ou non le nombre de terminaux utilisateurs autorisés par le système de service tiers ;
la détermination, par le serveur AAA, que l'enregistrement échoue si le nombre de terminaux utilisateurs en train d'utiliser le service a atteint le nombre de terminaux utilisateurs autorisés par le système de service tiers ; et
la détermination, par le serveur AAA, que l'enregistrement réussit si le nombre de terminaux utilisateurs en train d'utiliser le service n'a pas atteint le nombre de terminaux utilisateurs autorisés par le système de service tiers.

2. Procédé d'autorisation de service selon la revendication 1, comprenant en outre :
le renvoi d'une réponse d'échec de requête au terminal utilisateur pour empêcher le terminal utilisateur d'utiliser le service si l'enregistrement échoue (507).

3. Procédé d'autorisation de service selon la revendication 1, comprenant en outre :
la détection, par le serveur AAA, du terminal utilisateur s'enregistrant auprès du serveur AAA périodiquement ; et
le désenregistrement du terminal utilisateur si une période de non-utilisation du service requis par le terminal utilisateur s'enregistrant auprès du serveur AAA dépasse un seuil préétabli.

4. Serveur d'authentification, d'autorisation et de comptabilité, AAA, comprenant :
une unité de réception (10), adaptée pour recevoir une requête d'utilisation d'un service depuis un terminal utilisateur (3) ;
une unité d'acquisition d'informations (14), adaptée pour obtenir des informations du terminal utilisateur (3) depuis un système de service tiers en lançant une requête de recherche d'informations du terminal utilisateur au système de service tiers (5) ;
une unité de détermination (11), adaptée pour juger si le terminal utilisateur a enregistré ou non le service requis quand l'unité de réception reçoit la requête d'utilisation du service depuis le terminal utilisateur ;
une unité d'enregistrement (12), adaptée pour exécuter un enregistrement du terminal utilisateur (3) en fonction des informations du terminal utilisateur (3) obtenues par l'unité d'acquisition d'informations (14) quand l'unité de détermination (11) détermine que le terminal utilisateur (3) n'a pas encore enregistré le service requis ; et
une unité de traitement (13), adaptée pour autoriser le terminal utilisateur (3) à utiliser le service quand l'unité d'enregistrement (12) exécute correctement l'enregistrement ;
dans lequel l'unité d'enregistrement (12) comprend :
une sous-unité de contrôle de licence (121), adaptée pour juger si le nombre de terminaux utilisateurs en train d'utiliser le service a atteint ou non le nombre de terminaux utilisateurs autorisés par le système de service tiers (5) ; et
une sous-unité de détermination de résultat d'enregistrement (122), adaptée pour déterminer que l'enregistrement échoue quand la sous-unité de contrôle de licence (121) détermine que le nombre de terminaux utilisateurs en train d'utiliser le service a atteint le nombre de terminaux utilisateurs autorisés par le système de service tiers (5), ou pour déterminer que l'enregistrement réussit quand la sous-unité de contrôle de licence (121) détermine que le nombre de terminaux utilisateurs en train d'utiliser le service n'a pas atteint le nombre de terminaux utilisateurs autorisés par le système de service tiers (5).

5. Serveur AAA selon la revendication 4, dans lequel l'unité de traitement (13) est adaptée en outre pour renvoyer une réponse d'échec de requête au terminal utilisateur (3) pour empêcher le terminal utilisateur (3) d'utiliser le service quand la sous-unité de détermination de résultat d'enregistrement (122) détermine que l'enregistrement échoue.

6. Serveur AAA selon l'une quelconque des revendications 4 ou 5, comprenant en outre:
une unité de détection (15), adaptée pour détecter le terminal utilisateur (3) s'enregistrant auprès du serveur AAA (1) périodiquement ; et
une unité de désenregistrement (16), adaptée pour désenregistrer le terminal utilisateur (3) quand l'unité de détection (15) détecte qu'une période de non-utilisation du service requis par le terminal utilisateur (3) s'enregistrant auprès du serveur AAA (1) dépasse un seuil préétabli.

7. Système d'autorisation de service, comprenant :
un serveur d'authentification, d'autorisation et de comptabilité (AAA) (1) selon l'une quelconque des revendications 4 à 6 ; et
une entité de service tierce (17), adaptée pour mémoriser les informations relatives à un terminal utilisateur (3) qui doivent être utilisées par le serveur AAA (1) et pour rechercher les informations de terminal utilisateur du terminal utilisateur requérant l'utilisation d'un service.
